# FASCICULE DE BREVET EUROPEEN

(11) **EP 1 000 328 B1**
(45) Date de publication et mention de la délivrance du brevet: **17.10.2001**
(21) Numéro de dépôt: 98941502.1
(22) Date de dépôt: 30.07.1998
(51) Int. Cl.: G01J 3/18

(54) **MICROMONOCHROMATEUR ET PROCEDE DE REALISATION DE CELUI-CI**
MIKROMONOCHROMATOR UND VERFAHREN FÜR DESSEN HERSTELLUNG
MICROMONOCHROMATOR AND METHOD FOR PRODUCING SAME

(30) Priorité: 31.07.1997 FR 9709797
(43) Date de publication de la demande: 17.05.2000
(73) Titulaire: OPSITECH Optical System on a chip, 38054 Grenoble (FR)
(72) Inventeur: POUTEAU, Patrick, F-38340 Voreppe (FR); LABEYE, Pierre, F-38000 Grenoble (FR); GRAND, Gilles, F-38000 Grenoble (FR)
(74) Mandataire: Kremer, Robert A.M.
(86) Numéro de dépôt international: FR9801701
(87) Numéro de publication internationale: WO9906806

(56) Documents cités:
- EP-A- 0 393 372
- DE-A- 19 602 584
- FR-A- 2 609 180
- FR-A- 2 726 905
- US-A- 4 387 955
- SMIT M K ET AL: "PHASAR-BASED WDM-DEVICES: PRINCIPLES, DESIGN AND APPLICATIONS" IEEE JOURNAL OF SELECTED TOPICS IN QUANTUM ELECTRONICS, vol. 2, no. 2, juin 1996, pages 236-250, XP000685236 cité dans la demande

## Description

### Domaine technique

La présente invention concerne un micromonochromateur ainsi qu'un procédé de réalisation de celui-ci.

Elle s'applique en particulier :
- au multiplexage et au démultiplexage de longueur d'onde dans le domaine des télécommunications optiques, et
- à la spectrométrie.

### Etat de la technique antérieure

On sait qu'un micromonochromateur comprend des moyens de diffraction associés à au moins un point d'entrée et au moins un point de sortie.

Ces moyens de diffraction peuvent être réalisés par exemple au moyen d'un miroir de diffraction ou d'un réseau de microguides (Phase-array).

Dans le cas d'une application à la spectrométrie, un micromonochromateur permet de mesurer des variations d'intensité sur plusieurs longueurs d'onde par balayage de plusieurs longueurs d'onde par les moyens de diffraction.

Pour ce faire, on fait tourner les moyens de diffraction et/ou on balaye par une fente le point de sortie, ce dernier étant associé à un photodétecteur continu.

Considérons les micromonochromateurs connus comportant plusieurs points d'entrée et/ou plusieurs points de sortie.

A ce sujet on consultera le document suivant :
Microspectrometersystem Based on Integrated Optic Components in Polymers as Spectral Detection System for the VIS- and NIR Range, C. Müller, O. Fromhein, J. Göttert, T. Kühner, J. Mohr, Proc.7th Eur. Conf. On Int. Opt. (ECIO '95), Th A2, Applications of Integrated Optics, p.491 à 494.

Dans le cas du multiplexage/démultiplexage ou de la spectrométrie, ces points sont positionnés a priori et de manière fixe, ce qui ne permet pas dans le cas notamment de la spectrométrie, de faire une mesure continue.

### Exposé de l'invention

La présente invention a pour but de remédier à ces inconvénients.

Le micromonochromateur, objet de l'invention, permet un balayage continu de la longueur d'onde et non plus une discrétisation de la mesure spectrale comme dans l'art antérieur.

Ceci permet d'améliorer la résolution spectrale des microspectromètres.

Dans le domaine du multiplexage, le micromonochromateur objet de l'invention a l'avantage de permettre de régler, après fabrication de ce micromonochromateur, la longueur d'onde centrale d'un multiplexeur.

En outre, ce micromonochromateur permet, lors d'un démultiplexage, une commutation à volonté sur la voie de transmission désirée.

De préférence, le micromonochromateur objet de l'invention est réalisé au moyen de toute technique optique intégrée (permettant en particulier la réalisation de monochromateurs continus de longueur d'onde et de microguides mobiles).

Une telle technique permet une fabrication collective des composants du micromonochromateur.

L'invention s'applique à des structures guidantes aussi bien multimodes que monomodes.

De façon précise, la présente invention a pour objet un micromonochromateur formé sur un substrat en optique intégrée et comprenant des moyens de diffraction associés à une entrée comprenant au moins un point d'entrée et à une sortie comprenant au moins un point de sortie, ce micromonochromateur étant caractérisé en ce qu'il comprend en outre :
- des moyens mobiles de guidage de lumière associés à cette entrée ou à cette sortie ou aux deux, les moyens mobiles de guidage de lumière comprenant au moins une poutre mobile intégrée au substrat et munie d'au moins un guide de lumière, cette poutre mobile étant apte à balayer l'entrée et/ou la sortie de façon continue,et
- des moyens de récupération destinés à récupérer la lumière fournie par cette sortie.

Dans le cas du multiplexage/démultiplexage, ces moyens de guidage permettent d'optimiser le positionnement des différents points de sortie/d'entrée et, dans le cas de la spectrométrie, ils permettent de faire une mesure continue.

Selon un mode de réalisation particulier, la poutre mobile est associée à l'entrée et munie d'une source de lumière disposée directement sur cette poutre.

Les moyens de récupération peuvent comprendre des moyens de photodétection destinés à détecter la lumière fournie par la sortie ou des moyens de guidage de lumière (qui peuvent être des fibres optiques).

Les moyens mobiles de guidage de lumière peuvent comprendre un premier moyen mobile de guidage de lumière associé à l'entrée du micromonochromateur, et un deuxième moyen mobile de guidage de lumière associé à la sortie du micromonochromateur, les premier et deuxième moyens mobiles de guidage de lumière comprenant respectivement au moins une première poutre mobile intégrée au substrat et munie d'au moins un premier guide de lumière, cette première poutre mobile étant apte à balayer l'entrée de façon continue, et au moins une deuxième poutre mobile intégrée au substrat et munie d'au moins un deuxième guide de lumière, cette deuxième poutre mobile étant apte à balayer la sortie de façon continue.

Cela permet de réaliser un multiplexeur/démultiplexeur apte à récupérer ou à transmettre des informations en série ou de réaliser un spectromètre ayant une plus grande plage de mesure que les spectromètres connus, mentionnés plus haut.

Selon un premier mode de réalisation particulier, les première et deuxième poutres sont indépendantes l'une de l'autre. Selon un deuxième mode de réalisation particulier, les première et deuxième poutres sont rigidement solidaires l'une de l'autre.

Selon un mode de réalisation particulier du micromonochromateur objet de l'invention, celui-ci comprend une pluralité de poutres mobiles associées à l'entrée et/ou à la sortie, ces poutres étant indépendantes les unes des autres à l'entrée respectivement à la sortie. Selon un autre mode de réalisation particulier , le micromonochromateur comprend une pluralité de poutres mobiles associées à l'entrée et/ou à la sortie, ces poutres étant rigidement solidaires les unes des autres à l'entrée respectivement à la sortie.

Dans le cas où les moyens de récupération comprennent des moyens de photodétection destinés à détecter la lumière fournie par la sortie, ces moyens de photodétection peuvent comprendre des moyens de transfert de lumière et un photodétecteur disposé en regard d'une extrémité de ces moyens de transfert ou simplement au moins un photodétecteur.

Ce photodétecteur peut être disposé directement sur la poutre mobile, celle-ci étant alors associée à la sortie.

Les moyens de transfert mentionnés plus haut comportent par exemple au moins un guide de lumière ou une fibre optique ou encore une lentille.

Selon un premier mode de réalisation particulier du micromonochromateur objet de l'invention, les moyens de diffraction comprennent un miroir à multiples facettes encore appelé "réseau à échelette".

Les positions des facettes sont calculables par la méthode décrite dans le document suivant :
(1) Demande de brevet francais n° 86 18434 du 31 décembre 1986 correspondant à EP 0 275 795 A et à US 4,786,133 A.
   Selon un deuxième mode de réalisation particulier, les moyens de diffraction comprennent un réseau de microguides de lumière encore appelé "PHASAR".
   A ce sujet, on consultera le document suivant :
(2) PHASAR-based WDM-devices : principles, design and applications, Meint K. Smit and Cor van Dam, IEEE Journal of selected topics in quantum electronics, vol.2, n°2, juin 1996, p.236 à 250.

La présente invention concerne aussi un procédé de fabrication du micromonochromateur objet de l'invention, caractérisé en ce que les moyens de diffraction et les moyens mobiles de guidage de lumière sont fabriqués par une technique optique intégrée.

De façon avantageuse, ils sont fabriqués de façon collective par cette technique optique intégrée.

### Brève description des dessins

La présente invention sera mieux comprise à la lecture de la description d'exemples de réalisation donnés ci-après, à titre purement indicatif et nullement limitatif, en faisant référence aux dessins annexés, sur lesquels :
- la figure 1 est une vue en perspective schématique d'un micromonochromateur classique réalisé par une technique optique intégrée,
- la figure 2 est une vue en perspective schématique d'un micromonochromateur conforme à l'invention, comprenant une poutre mobile supportant un microguide d'entrée,
- la figure 3 est une vue en perspective schématique d'un micromonochromateur conforme à l'invention, comprenant une poutre mobile à son entrée et une poutre mobile à sa sortie, ces poutres supportant chacune un microguide,
- la figure 4 est une vue en perspective schématique d'un micromonochromateur conforme à l'invention, comprenant une poutre mobile à son entrée et une poutre mobile à sa sortie, ces poutres mobiles supportant chacune un microguide et étant liées l'une à l'autre,
- la figure 5 est une vue en perspective schématique d'un micromonochromateur conforme à l'invention, constitué de la même façon que celui de la figure 4 mais comprenant en plus un peigne électrostatique de commande des poutres mobiles,
- la figure 6 est une vue de dessus schématique d'un autre micromonochromateur conforme à l'invention, comprenant une poutre mobile à son entrée et des moyens de diffraction constitués par un réseau de microguides, et
- la figure 7 illustre schématiquement un micromonochromateur conforme à l'invention comportant une pluralité de poutres mobiles par exemple en entrée.

### Exposé détaillé de modes de réalisation particuliers

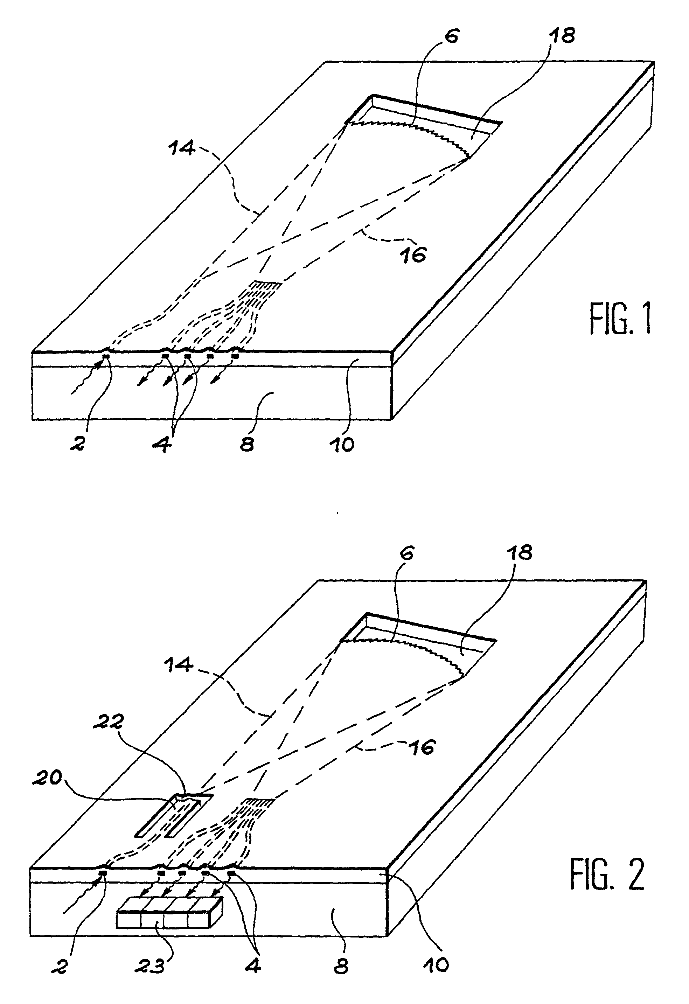

Précisons tout d'abord que les micromonochromateurs conformes à l'invention qui sont schématiquement représentés sur les figures 2 à 6 sont fabriqués par une technique d'optique intégrée permettant une fabrication collective de l'ensemble des composants de chaque micromonochromateur et que le réglage optique de chacun de ceux-ci (positionnement de la poutre ou des poutres qu'il comporte) est réalisé par le procédé de fabrication lui-même.

Pour la fabrication des moyens de diffraction dans le cas des figures 2 à 5 où ces moyens de diffraction sont constitués par un miroir à multiples facettes, on consultera le document (1) déjà cité.

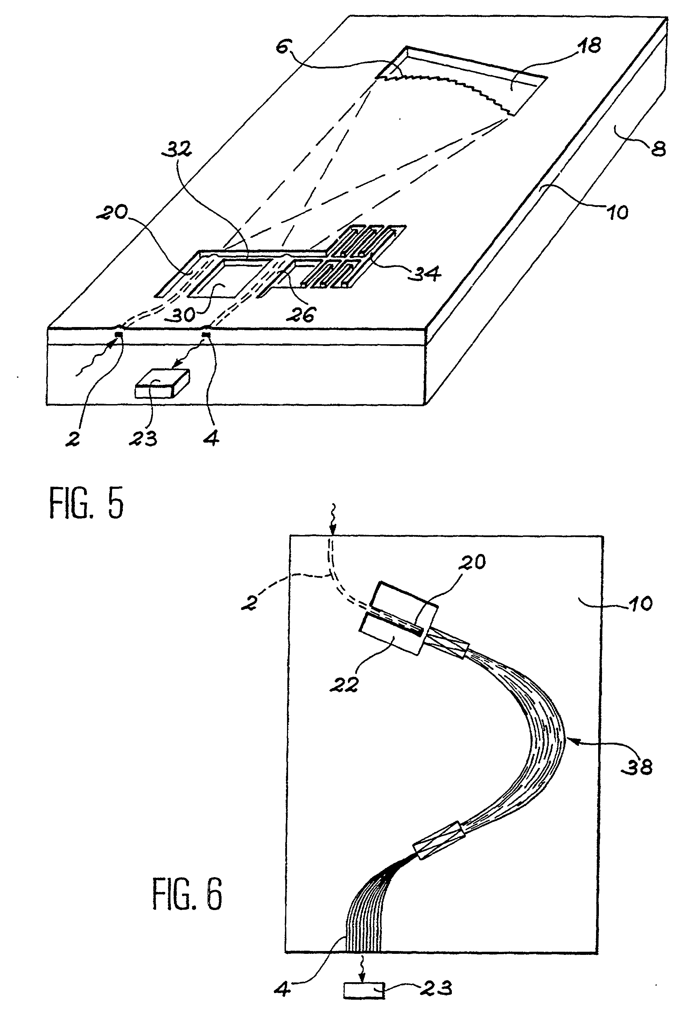

Pour la fabrication des moyens de diffraction représentés sur la figure 6 où ces moyens sont constitués par un réseau de microguides, on se reportera au document (2).

En ce qui concerne la fabrication de chacune des poutres mobiles, munie d'un guide de lumière, on se reportera au document suivant :
(3) FR 2 660 444 A correspondant à EP 0 451 018 A et à US 5,078,514 A.
   Dans un mode de réalisation non représenté, les poutres mobiles peuvent être munies de petits bras de rappel mécanique.
   A ce sujet, on consultera le document suivant :
(4) Demande de brevet français n° 94 13559 du 10 novembre 1994 (FR 2 726 905 A) correspondant à EP 0 712 004 A.

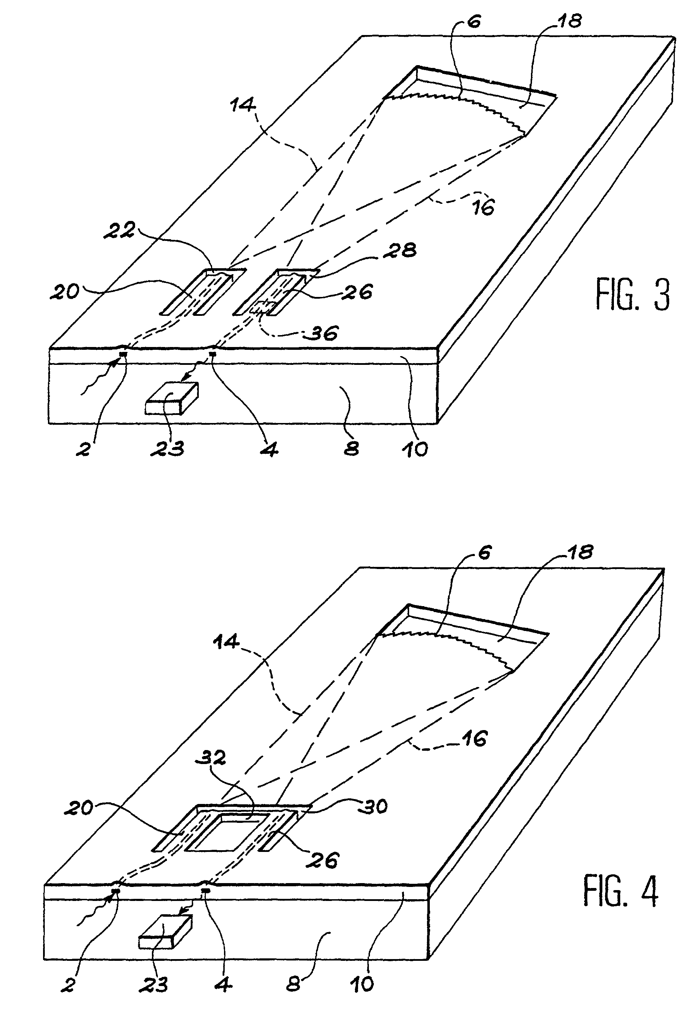

Lorsqu'un micromonochromateur conforme à l'invention comprend une poutre à son entrée et une poutre à sa sortie, ces deux poutres peuvent être déplacées simultanément en prévoyant un bras de liaison entre les deux poutres comme on le voit sur la figure 4 ou peuvent être déplacées indépendamment l'une de l'autre comme c'est le cas sur la figure 3.

Considérons d'abord le cas d'un multiplexeur/démultiplexeur de longueur d'onde.

Dans le cas du démultiplexage de longueur d'onde, le positionnement d'une poutre mobile avec le guide d'entrée des moyens de diffraction, conformément à l'invention, permet de compenser, après fabrication, toute dérive en longueur d'onde du démultiplexeur (variation de l'indice absolu visé par exemple).

En effet, la position des longueurs d'onde de sortie du démultiplexeur dépend bien entendu de la forme du composant optique utilisé pour réaliser la diffraction mais dépend aussi de l'indice optique absolu des couches réalisées.

La distance entre les longueurs d'onde de sortie varie peu en fonction de l'indice de réfraction de la couche optique.

En revanche, la position des longueurs d'onde de sortie est très sensible à la variation de cet indice de réfraction.

Cette variation peut être compensée par une modification de la position du guide d'entrée des moyens de diffraction.

A ce sujet, on se reportera aux calculs qui se trouvent dans le document (1) mentionné plus haut.

Une modification de la position du guide d'entrée modifie la position des longueurs d'onde de sortie.

On comprend ainsi l'importance de la poutre mobile en entrée.

De plus, la réalisation d'une poutre mobile en face de l'entrée des moyens de diffraction impose de laisser un espace libre entre cette poutre mobile et cette entrée.

Cet espace libre peut être utilisé pour y introduire toute optique appropriée permettant d'améliorer les performances du démultiplexeur de longueur d'onde.

On peut par exemple introduire dans cet espace libre des microlentilles ou des lames de déphasage ou des couches antireflet ou un liquide d'indice.

Le raisonnement précédent est le même dans le cas d'un multiplexeur.

Dans ce cas, la poutre mobile est située en sortie des moyens de diffraction.

Considérons maintenant le cas d'un spectromètre.

Conformément à l'invention, on remplace la barrette de photodétecteurs utilisée pour réaliser la détection dans un spectromètre connu (voir le document Microspectrometersystem Based on Integrated Optic Components in Polymers as Spectral Detection System for the VIS- and NIR Range déjà cité) par une poutre mobile avec un guide optique et un photodétecteur à l'extrémité de ce guide optique ou bien un photodétecteur directement positionné sur cette poutre mobile.

Ceci permet de réaliser une détection continue du spectre à mesurer, la résolution n'étant plus limitée par la dimension des photodétecteurs utilisés dans l'art antérieur.

Comme on l'a vu plus haut, le déplacement du guide d'entrée (respectivement de sortie) des moyens de diffraction d'un micromonochromateur conforme à l'invention permet de déplacer les longueurs d'onde de sortie (respectivement d'entrée) du démultiplexeur (respectivement du multiplexeur) utilisant ce micromonochromateur.

Dans le cas du spectromètre, tout le spectre se décale.

Cela peut permettre dans certains cas d'améliorer la gamme de mesure du spectromètre en particulier si des poutres d'entrée et de sortie sont associées aux moyens de diffraction et sont liées l'une à l'autre.

Dans ce cas, lorsque les voies d'entrée et de sortie du micromonochromateur se trouvent à proximité l'une de l'autre d'un même côté de ce micromonochromateur, on peut réaliser un seul dispositif de commande des poutres d'entrée et de sortie comme cela est schématiquement illustré sur la figure 5.

La figure 1 est une vue en perspective schématique d'un micromonochromateur connu, réalisé par une technique optique intégrée.

Ce micromonochromateur de la figure 1 comprend un microguide optique d'entrée 2 et une pluralité de microguides optiques de sortie 4.

Il comprend également des moyens de diffraction 6 constitués par un réseau à échelette placé en regard des microguides d'entrée et de sortie comme on le voit sur la figure 1 et fonctionnant en réflexion.

Ces microguides 2 et 4 et le réseau 6 sont formés par exemple sur un substrat 8 à la surface duquel se trouve un ensemble 10 de trois couches (deux couches de SiO₂ et une couche intermédiaire de SiO₂ dopée pour avoir un indice de réfraction supérieur à celui des deux autres couches).

Les microguides 2 et 4 sont formés par gravure de cette couche intermédiaire (voir le document (1)).

Dans l'exemple représenté, on cherche par exemple à démultiplexer quatre longueurs d'onde λ1, λ2, λ3 et λ4.

Les lumières ayant ces longueurs d'onde sont envoyées dans le microguide 2 et démultiplexées par le réseau 6 prévu à cet effet.

On utilise ainsi quatre microguides de sortie 4 qui récupèrent respectivement ces longueurs d'onde λ1, λ2, λ3 et λ4.

Sur la figure 1, la référence 14 représente les limites du faisceau optique allant vers le miroir de diffraction et la référence 16 représente les limites du faisceau de retour.

On voit également qu'un espace libre 18 a été gravé à travers l'ensemble de couches 10 pour former le réseau 6 (voir aussi le document (1)).

Le micromonochromateur conforme à l'invention qui est schématiquement représenté en perspective sur la figure 2 est identique au micromonochromateur de la figure 1 excepté que la partie terminale du microguide 2, qui se trouve en regard du réseau 6, est formée sur une poutre mobile 20 apte à se déplacer dans un espace libre 22 formé à travers l'ensemble de couches 10.

On voit également sur la figure 2 des moyens de photodétection référencés 23.

Ces moyens de photodétection sont destinés à détecter la lumière fournie par chacun des microguides de sortie 4.

Des moyens de commande non représentés comme par exemple un peigne électrostatique de commande sont également prévus sur le substrat 10 pour déplacer comme on le souhaite la poutre mobile 20 et donc l'extrémité du microguide 2, en regard du réseau 6.

Le micromonochromateur conforme à l'invention qui est schématiquement représenté en perspective sur la figure 3 est identique à celui de la figure 2 excepté que la sortie de ce micromonochromateur ne comprend plus qu'un seul microguide 4 (au lieu de quatre dans le cas de la figure 2).

Dans le cas de la figure 3, l'extrémité de ce microguide 4 se trouve sur une poutre mobile 26 qui est mobile dans un espace libre 28 formé à travers l'ensemble de couches 10.

Les poutres 20 et 26 sont identiques l'une à l'autre et parallèles comme on le voit sur la figure 3.

Les moyens de commande permettant de déplacer la poutre mobile 26 et donc le microguide correspondant 4 ne sont pas représentés sur la figure 3.

Ces moyens de commande peuvent également être un peigne électrostatique de commande.

Dans le cas des figures 1 à 5, on voit que les microguides 2 et 4 se trouvent d'un même côté du substrat 8 et, dans le cas des figures 3 à 5, les poutres se trouvent donc également d'un même côté ce ce substrat.

Dans le cas de la figure 3, le déplacement de la poutre mobile 26 permet de sélectionner l'une quelconque des longueurs d'onde démultiplexées grâce au réseau 6.

Dans le cas de la figure 3, les poutres mobiles 20 et 26 sont indépendantes l'une de l'autre.

Dans le cas de la figure 4, les poutres mobiles 20 et 26 sont au contraire rendues rigidement solidaires l'une de l'autre.

Plus précisément, le micromonochromateur conforme à l'invention qui est schématiquement représenté en perspective sur la figure 4 est identique à celui de la figure 3 excepté que les poutres 20 et 26 sont, dans le cas de la figure 4, mobiles dans un même espace libre 30 formé à travers l'ensemble de couches 10.

On voit également dans cet espace 30 un bras transversal 32 qui est perpendiculaire aux poutres 20 et 26 et qui relie l'une à l'autre les extrémités de ces poutres se trouvant en regard du réseau 6.

Ainsi, tout déplacement de l'une des deux poudres implique un déplacement de l'autre poutre.

Les moyens de commande des deux poutres 20 et 26 ne sont pas représentés sur la figure 4.

Sur la figure 5, on a représenté un exemple de tels moyens de commande permettant le déplacement des deux poutres 20 et 26.

Ces moyens de commande sont constitués par un peigne électrostatique de commande 34 activé par des moyens non représentés.

Ce peigne 34 est formé par une technique d'optique intégrée à partir de l'ensemble de couches 10.

On voit également sur les figures 2 à 5 les photodétecteurs 23 destinés à détecter la lumière fournie par chaque microguide de sortie 4.

Dans le cas de la figure 2, il y a bien entendu quatre photodétecteurs tandis que dans le cas des figures 3 à 5, on utilise un seul photodétecteur 23.

Dans le cas des figures 2 à 5, chaque photodétecteur est formé en regard des extrémités des microguides de sortie, opposées aux extrémités qui se trouvent en regard du réseau 6.

Au lieu de cela, on peut prévoir un photodétecteur 36 directement formé sur la poutre mobile 4, du côté d'une extrémité de cette poutre mobile opposée à celle qui se trouve en regard du réseau 6.

Dans ce cas, le microguide de sortie 4 ne se prolonge pas au-delà de cette poutre 26 (lorsqu'on s'éloigne du réseau 6).

Dans un mode de réalisation non représenté, le micromonochromateur conforme à l'invention comprend encore bien entendu le microguide d'entrée 2 dont une extrémité se trouve sur la poutre mobile 20 mais ne comprend aucun microguide de sortie.

Le ou les microguides de sortie sont alors remplacés par un ou des photodétecteurs.

Au lieu d'utiliser un réseau à échelette en tant que moyen de diffraction, on peut utiliser un réseau de microguides ou PHASAR comme l'illustre schématiquement la figure 6.

Le micromonochromateur conforme à l'invention qui est schématiquement représenté en vue de dessus sur la figure 6 comprend un tel réseau de microguides 38.

D'un côté de celui-ci se trouve encore un microguide d'entrée 2 dont une extrémité est formée sur une poutre 20 mobile dans un espace libre 22 prévu sur le substrat.

Les moyens de commande du déplacement de cette poutre ne sont pas représentés sur la figure 6.

De l'autre côté du réseau de microguide 38 se trouvent les microguides de sortie 4 du micromonochromateur.

Les figures 1, 2 et 6 sont données à titre d'exemple avec 1 entrée et N sorties.

Bien entendu on peut avoir de la même façon N entrées et 1 sortie (cas du multiplexeur) ou encore N entrées et M sorties (les moyens mobiles étant de préférence situés du côté des entrées si N<M ou du côté des sorties si M<N).

A titre d'exemple, le multiplexeur peut correspondre à la figure 2 avec en entrée le réseau de microguides 4 et en sortie le microguide 2, la référence 23 correspondant alors à des sources de longueurs d'onde différentes.

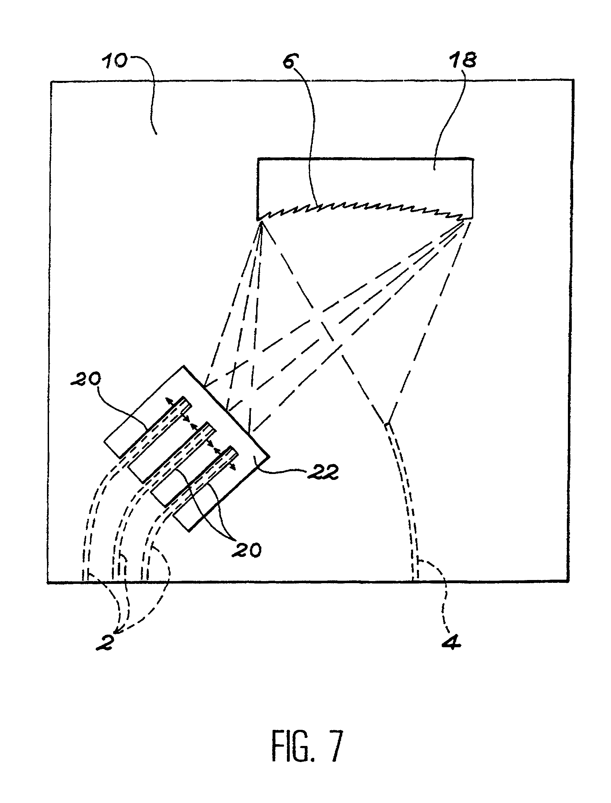

La figure 7 illustre schématiquement un micromonochromateur conforme à l'invention comportant une pluralité de poutres mobiles 20 par exemple en entrée, chaque poutre étant munie d'un microguide 2. On peut aussi fabriquer un micromonochromateur conforme à l'invention comportant une pluralité de poutres mobiles en sortie (munies chacune d'un microguide) ou même une pluralité de poutres mobiles en entrée et en sortie. Ces poutres mobiles d'entrée ou de sortie peuvent être indépendantes les unes des autres et donc commandées indépendamment les unes des autres (cas de la figure 7) ou, au contraire, rigidement solidaires les unes des autres pour être commandées simultanément. On peut même avoir une pluralité de poutres mobiles en entrée et en sortie, toutes ces poutres étant commandées simultanément (ceci étant d'ailleurs illustré par la figure 4 dans le cas d'une poutre en entrée et en sortie).

De plus, toute poutre mobile d'entrée peut être munie d'une source de lumière disposée directement sur cette poutre. De même, toute poutre mobile de sortie peut être munie d'un photodétecteur (comme l'illustre schématiquement la figure 3 dans le cas d'une seule poutre de sortie).

Il convient de noter le grand intérêt que confère à l'invention l'utilisation d'au moins une poutre mobile apte à balayer l'entrée et/ou la sortie de façon continue. En particulier dans le cas d'un multiplexage, une telle poutre en entrée permet de multiplexer n'importe quelle longueur d'onde (cela peut se concevoir par exemple avec la figure 7), alors que le fait de ne pas pouvoir faire varier continûment la poutre mobile ne permettrait de multiplexer que des longueurs d'onde définies à l'avance. De même, dans le cas d'un démultiplexage, une telle poutre en sortie permet de démultiplexer n'importe quelle longueur d'onde.

## Revendications

1. Micromonochromateur formé sur un substrat en optique intégrée et comprenant des moyens de diffraction (6, 38) associés à une entrée comprenant au moins un point d'entrée et à une sortie comprenant au moins un point de sortie, ce micromonochromateur étant **caractérisé en ce qu'**il comprend en outre :
- des moyens mobiles de guidage de lumière (2-20, 4-26) associés à cette entrée ou à cette sortie ou aux deux, les moyens mobiles de guidage de lumière comprenant au moins une poutre mobile (20, 26) intégrée au substrat et munie d'au moins un guide de lumière (2, 4), cette poutre mobile étant apte à balayer l'entrée et/ou la sortie de façon continue, et
- des moyens (23) de récupération destinés à récupérer la lumière fournie par cette sortie.

2. Micromonochromateur selon la revendication 1, dans lequel les moyens de récupération comprennent des moyens de photodétection (23) destinés à détecter la lumière fournie par la sortie.

3. Micromonochromateur selon la revendication 1, dans lequel les moyens de récupération comprennent des moyens de guidage de lumière.

4. Micromonochromateur selon l'une quelconque des revendications 1 à 3, dans lequel les moyens mobiles de guidage de lumière comprennent :
- un premier moyen mobile de guidage de lumière (2-20) associé à l'entrée du micromonochromateur, et
- un deuxième moyen mobile de guidage de lumière (4-26) associé à la sortie du micromonochromateur,
- les premier et deuxième moyens mobiles de guidage de lumière comprenant respectivement au moins une première poutre mobile (20) intégrée au substrat et munie d'au moins un premier guide de lumière (2), cette première poutre mobile étant apte à balayer l'entrée de façon continue et au moins une deuxième poutre mobile (26) intégrée au substrat et munie d'au moins un deuxième guide de lumière (4), cette deuxième poutre mobile étant apte à balayer la sortie de façon continue.

5. Micromonochromateur selon la revendication 4, dans lequel les première et deuxième poutres sont indépendantes l'une de l'autre.

6. Micromonochromateur selon la revendication 4, dans lequel les première et deuxième poutres sont rigidement solidaires l'une de l'autre.

7. Micromonochromateur selon la revendication 1, comprenant une pluralité de poutres mobiles associées à l'entrée et/ou à la sortie, ces poutres étant indépendantes les unes des autres à l'entrée respectivement à la sortie.

8. Micromonochromateur selon la revendication 1, comprenant une pluralité de poutres mobiles associées à l'entrée et/ou à la sortie, ces poutres étant rigidement solidaires les unes des autres à l'entrée respectivement à la sortie.

9. Micromonochromateur selon la revendication 1, dans lequel la poutre mobile est associée à l'entrée et munie d'une source de lumière disposée directement sur cette poutre.

10. Micromonochromateur selon la revendication 2, dans lequel les moyens de photodétection comprennent des moyens de transfert de lumière et un photodétecteur disposé en regard d'une extrémité de ces moyens de transfert.

11. Micromonochromateur selon la revendication 2, dans lequel les moyens de photodétection comprennent au moins un photodétecteur.

12. Micromonochromateur selon la revendication 1, dans lequel les moyens de récupération comprennent des moyens de photodétection destinés à détecter la lumière fournie par la sortie et ces moyens de photodétection comprennent au moins un photodétecteur (36) qui est disposé directement sur la poutre mobile (26), celle-ci étant alors associée à la sortie.

13. Micromonochromateur selon l'une quelconque des revendications 1 à 12, dans lequel les moyens de diffraction comprennent un miroir à multiples facettes (6).

14. Micromonochromateur selon l'une quelconque des revendications 1 à 12, dans lequel les moyens de diffraction comprennent un réseau de microguides de lumière (38).

15. Procédé de fabrication du micromonochromateur selon l'une quelconque des revendications 1 à 14,
**caractérisé en ce que** les moyens de diffraction (6, 38) et les moyens mobiles de guidage de lumière (2-20, 4-26) sont fabriqués par une technique optique intégrée.

16. Procédé selon la revendication 15, dans lequel les moyens de diffraction (6, 38) et les moyens mobiles de guidage de lumière (2-20, 4-26) sont fabriqués de façon collective par cette technique optique intégrée.

## Patentansprüche

1. Mikromonochromator, der in integrierter Optik auf einem Substrat gebildet ist und Beugungseinrichtungen (6,38) aufweist, die einem Eingang, der mindestens einen Eingangspunkt aufweist, und einem Ausgang, der mindestens einen Ausgangspunkt aufweist, zugeordnet sind, wobei der Mikromonochromator **dadurch gekennzeichnet ist, daß** er ferner aufweist:
- bewegliche Lichtleitungseinrichtungen (2-20, 4-26), die dem Eingang und/oder mit dem Ausgang zugeordnet sind, wobei die beweglichen Lichtleitungseinrichtungen mindestens einen beweglichen Träger (20,26) aufweisen, der in das Substrat integriert ist und mit mindestens einem Lichtleiter (2,4) versehen ist, wobei dieser bewegliche Träger geeignet ist, den Eingang und/oder den Ausgang kontinuierlich abzutasten, und
- Wiedergewinnungseinrichtungen (23), die dazu bestimmt sind, das von dem Ausgang bereitgestellte Licht wiederzugewinnen.

2. Mikromonochromator nach Anspruch 1, bei dem die Wiedergewinnungseinrichtungen Photodetektionseinrichtungen (23) aufweisen, die dazu bestimmt sind, das von dem Ausgang bereitgestellte Licht zu erfassen.

3. Mikromonochromator nach Anspruch 1, bei dem die Wiedergewinnungseinrichtungen Lichtleitungseinrichtungen aufweisen.

4. Mikromonochromator nach einem der Ansprüche 1 bis 3, bei dem die beweglichen Lichtleitungseinrichtungen aufweisen:
- eine erste bewegliche Lichtleitungseinrichtung (2-20), die dem Eingang des Mikromonochromators zugeordnet ist, und
- eine zweite bewegliche Lichtleitungseinrichtung (4-26), die dem Ausgang des Mikromonochromators zugeordnet ist,
- wobei die erste und zweite bewegliche Lichtleitungseinrichtung jeweils mindestens einen ersten beweglichen Träger (20), der in das Substrat integriert ist und mit mindestens einem ersten Lichtleiter (2) versehen ist, wobei dieser erste bewegliche Träger geeignet ist, den Eingang kontinuierlich abzutasten, und mindestens einen zweiten beweglichen Träger (26) aufweist, der in das Substrat integriert ist und mit mindestens einem zweiten Lichtleiter (4) versehen ist, wobei dieser zweite bewegliche Träger geeignet ist, den Ausgang kontinuierlich abzutasten.

5. Mikromonochromator nach Anspruch 4, bei dem der erste und zweite Träger voneinander unabhängig sind.

6. Mikromonochromator nach Anspruch 4, bei dem der erste und zweite Träger starr miteinander verbunden sind.

7. Mikromonochromator nach Anspruch 1, der mehrere bewegliche Träger aufweist, die dem Eingang und/oder dem Ausgang zugeordnet sind, wobei diese Träger an dem Eingang bzw. an dem Ausgang voneinander unabhängig sind.

8. Mikromonochromator nach Anspruch 1, der mehrere bewegliche Träger aufweist, die dem Eingang und/oder dem Ausgang zugeordnet sind, wobei diese Träger an dem Eingang bzw. an dem Ausgang starr miteinander verbunden sind.

9. Mikromonochromator nach Anspruch 1, bei dem der bewegliche Träger dem Eingang zugeordnet und mit einer Lichtquelle versehen ist, die direkt auf diesem Träger angeordnet ist.

10. Mikromonochromator nach Anspruch 2, bei dem die Photodetektionseinrichtungen Lichtübertragungseinrichtungen und einen Photodetektor aufweisen, der gegenüber einem Ende dieser Übertragungseinrichtungen angeordnet ist.

11. Mikromonochromator nach Anspruch 2, bei dem die Photodetektionseinrichtungen mindestens einen Photodetektor aufweisen.

12. Mikromonochromator nach Anspruch 1, bei dem die Wiedergewinnungseinrichtungen Photodetektionseinrichtungen aufweisen, die dazu bestimmt sind, das von dem Ausgang bereitgestellte Licht zu erfassen, und diese Photodetektionseinrichtungen mindestens einen Photodetektor (36) aufweisen, der direkt auf dem beweglichen Träger (26) angeordnet ist, wobei dieser in diesem Fall dem Ausgang zugeordnet ist.

13. Mikromonochromator nach einem der Ansprüche 1 bis 12, bei dem die Beugungseinrichtungen einen Spiegel mit mehreren Flächen (6) aufweisen.

14. Mikromonochromator nach einem der Ansprüche 1 bis 12, bei dem die Beugungseinrichtungen ein Netz aus Mikrolichtleitern (38) aufweisen.

15. Verfahren zur Herstellung des Mikromonochromators nach einem der Ansprüche 1 bis 14, **dadurch gekennzeichnet, daß** die Beugungseinrichtungen (6,38) und die beweglichen Lichtleitungseinrichtungen (2-20, 4-26) mittels einer Technik der integrierten Optik hergestellt werden.

16. Verfahren nach Anspruch 15, bei welchem die Beugungseinrichtungen (6,38) und die beweglichen Lichtleitungseinrichtungen (2-20, 4-26) mit dieser Technik der integrierten Optik gemeinsam hergestellt werden.

## Claims

1. A micromonochromator formed on an integrated optical substrate and including a diffraction system (6, 38) associated with an entry comprising at least one entry point and an exit comprising at least one exit point, said micromonochromator being **characterized in that** it further includes:
- a mobile light guide system (2-20, 4-26) associated with said entry or said exit or both, the mobile light guide system including at least one mobile beam (20, 26) integrated with the substrate and provided with at least one light guide (2, 4), said mobile beam being adapted to scan the entry and/or the exit continuously, and
- a recovery system (23) for recovering the light supplied by said exit.

2. A micromonochromator according to claim 1, wherein said recovery system includes a photosensing system (23) adapted to detect the light supplied by the exit.

3. A micromonochromator according to claim 1, wherein the recovery system includes a light guide system.

4. A micromonochromator according to any of claims 1 to 3, wherein the mobile light guide system includes:
- a first mobile light guide system (2-20) associated with the entry of the micromonochromator, and
- a second mobile light guide system (4-26) associated with the exit of the micromonochromator,
- the first and second mobile light guide systems respectively including at least one first mobile beam (20) integrated with the substrate and provided with at least a first light guide (2), said first mobile beam being adapted to scan the entry continuously, and at least one second mobile beam (26) integrated with the substrate and provided with at least one second light guide (4), said second mobile beam being adapted to scan the exit continuously.

5. A micromonochromator according to claim 4, wherein the first and second beams are independent of each other.

6. A micromonochromator according to claim 4, wherein the first and second beams are rigidly joined together.

7. A micromonochromator according to claim 1, including a plurality of mobile beams associated with the entry and/or the exit, said beams being independent of each other at the entry, respectively at the exit.

8. A micromonochromator according to claim 1, including a plurality of mobile beams associated with the entry and/or the exit, said beams being rigidly connected together at the entry, respectively at the exit.

9. A micromonochromator according to claim 1, wherein the mobile beam is associated with the entry and provided with a light source disposed directly on said beam.

10. A micromonochromator according to claim 2, wherein the photosensing system includes a light transfer system and a photosensor facing one end of said transfer system.

11. A micromonochromator according to claim 2, wherein the photosensing system includes at least one photosensor.

12. A micromonochromator according to claim 1, wherein the recovery system includes a photosensing system adapted to detect the light supplied by the exit and said photosensing system includes at least one photosensor (36) disposed directly on the mobile beam (26), which is then associated with the exit.

13. A micromonochromator according to any of claims 1 to 12, wherein the diffraction system includes a mirror (6) with multiple facets.

14. A micromonochromator according to any of claims 1 to 12, wherein the diffraction system includes an array of light microguides (38).

15. A method of fabricating the micromonochromator according to any of claims 1 to 14, **characterized in that** the diffraction system (6, 38) and the mobile light guide system (2-20, 4-26) are fabricated by means of an integrated optical technology.

16. A method according to claim 15, wherein the diffraction system (6, 38) and the mobile light guide system (2-20, 4-26) are fabricated collectively by means of said integrated optical technology.
